# EUROPEAN PATENT SPECIFICATION

(11) **EP 2 036 938 B1**
(45) Date of publication and mention of the grant of the patent: **26.12.2012**
(21) Application number: 07767736.7
(22) Date of filing: 27.06.2007
(51) Int. Cl.: C08G 65/336, C08G 65/10, C08G 65/333, C08L 71/00

(54) **PROCESS FOR PRODUCTION OF OXYALKYLENE POLYMER AND CURABLE COMPOSITION**
VERFAHREN ZUR HERSTELLUNG EINES OXYALKYLENPOLYMERS UND HÄRTBARE ZUSAMMENSETZUNG
PROCÉDÉ DE PRODUCTION DE POLYMÈRE D'OXYALKYLÈNE ET COMPOSITION DURCISSABLE

(30) Priority: 03.07.2006 JP 2006183287
(43) Date of publication of application: 18.03.2009
(73) Proprietor: Asahi Glass Company, Limited, Chiyoda-ku Tokyo 100-8405 (JP)
(72) Inventor: KIMURA, Yuuji, Kamisu-city Ibaraki 314-0195 (JP); ENNA, Genichirou, Kamisu-city Ibaraki 314-0195 (JP); TANAKA, Hideaki, Kamisu-city Ibaraki 314-0195 (JP)
(74) Representative: Hartz, Nikolai
(86) International application number: PCT/JP2007/062938
(87) International publication number: WO 2008/004482

(56) References cited:
- EP-A1- 1 614 717
- WO-A1-2004/092270
- WO-A1-2005/073276
- JP-A- 06 271 757
- JP-A- 10 245 482
- JP-A- 11 124 509
- JP-A- 2002 513 052
- JP-A- 2006 063 335
- DATABASE CA [Online] CHEMICAL ABSTRACTS SERVICE, COLUMBUS, OHIO, US; 9 July 1996 (1996-07-09), DOI, TAKAO ET AL: "Hydrolyzable silyl-modified polyoxyalkylene curable compositions with good mechanical strength, adhesiveness, and storage stability" XP002579324 retrieved from STN Database accession no. 125:223555 -& JP 08 176429 A (ASAHI GLASS CO LTD, JAPAN) 9 July 1996 (1996-07-09)
- DATABASE CA [Online] CHEMICAL ABSTRACTS SERVICE, COLUMBUS, OHIO, US; 12 November 1996 (1996-11-12), DOI, TAKAO ET AL: "Curing polymer compositions with good storage stability" XP002579325 retrieved from STN Database accession no. 126:90167 -& JP 08 295804 A (ASAHI GLASS CO LTD, JAPAN) 12 November 1996 (1996-11-12)

## Description

### TECHNICAL FIELD

The present invention relates to a method for producing an oxyalkylene polymer having a urethane bond and an alkoxysilyl group. Described is and a curable composition containing the polymer obtained by such a method.

### BACKGROUND ART

A curable composition made of a polymer having a hydrolyzable silicon group at the terminal of a polyoxyalkylene chain (also called a modified silicone polymer), forms a cured product excellent in rubber elasticity by moisture-curing. Therefore, the curable composition is widely used as an adhesive, a coating agent or a sealing material. Especially, a curable composition made of a polymer having a methyl dimethoxysilyl group at the terminal of a polyoxyalkylene chain is widely accepted in the market as a sealing material due to its excellent elongation property. (cf. Patent Document 1).

Further, a curable composition containing a polymer having a polyoxyalkylene chain and a trialkoxysilyl group has a high curing rate and a high crosslink density, whereby it is useful as a rapid curable adhesive, coating agent or sealing material (cf. Patent Document 2).

As such a curable composition, a curable composition is known, which contains a specific polymer having a polyoxyalkylene chain and a trialkoxysilyl group bonded to the terminal of the polyoxyalkylene chain via a -OCH₂CH₂CH₂- group or a SCH₂CH₂CH₂- group, or a specific polymer having a polyoxyalkylene chain and a trialkoxysilyl group bonded to the terminal of the polyoxyalkylene chain via a urethane bond, and a compound having an amino group and an alkoxysilyl group. (cf. Patent Document 3).

In the curable composition, the specific polymer having a trialkoxysilyl group bonded to the terminal of the polyoxyalkylene chain via a urethane bond has conventionally been obtained by a urethanization reaction between polyoxyalkylene polyol and a trialkoxysilyl compound containing an isocyanate group by a metal catalyst such as an organic tin compound.

However, when the obtained specific polymer is incorporated in the curable composition without completely removing such a catalyst, the metal catalyst such as an organic tin compound functions as a curing catalyst for the curable composition, whereby the storage stability of the curable composition was not sufficient.
Patent Document 1: JP-A-03-072527
Patent Document 2: JP-A-03-047825
Patent Document 3: JP-A-10-245482
JP 08 176429 A and JP 08 295804 A relate to curable compositions having storage stabiliy.

### DISCLOSURE OF THE INVENTION

### OBJECTS TO BE ACCOMPLISHED BY THE INVENTION

The present invention has objects to provide a method for producing an oxyalkylene polymer having a urethane bond and an alkoxysilyl group, which comprises subjecting a polymer having a polyoxyalkylene chain and a hydroxyl group and a compound having an alkoxysilyl group and an isocyanate group, to a urethanization reaction, and a curable composition which is a curable composition containing the polymer, and which is excellent in the storage stability while maintaining the rapid curing property.

### MEANS TO ACCOMPLISH THE OBJECTS

The present inventors have conducted extensive studies, and as a result, they have found that a urethanization reaction can be carried out by using a double metal cyanide complex catalyst having an organic ligand instead of using a conventional urethane-forming catalyst such as an organic tin compound when the polymer having a polyoxyalkylene chain and a hydroxyl group, and the compound having an alkoxysilyl group and an isocyanate group are subjected to a urethanization reaction, and they have also found that the storage stability is excellent even without removing the double metal cyanide complex catalyst having an organic ligand from the curable composition containing the obtained polymer. The present invention has been accomplished on the basis of these discoveries.

The present invention provides the following.
1. A method for producing an oxyalkylene polymer (P) having a urethane bond and an alkoxysilyl group (in the present invention, referred also as the oxyalkylene polymer (P) or the polymer (P)), which comprises subjecting a polymer (pP) having a polyoxyalkylene chain and a hydroxyl group and a compound (U) having an alkoxysilyl group and an isocyanate group, to a urethanization reaction in the presence of a double metal cyanide complex catalyst having an organic ligand, as further defined in item 3 below.
2. The method for producing an oxyalkylene polymer (P) according to the above 1, wherein the compound (U) is a compound represented by the following formula (1), and the oxyalkylene polymer (P) is the polymer having a group represented by the following formula (2):

   (X¹-)ₐ(R-)_{b}Si-Q^{U}-NCO (1)

   (X¹-)ₐ(R-)_{b}Si-Q^{u}-NHCOO- (2)

   wherein each X¹ is independently a C₁₋₆ alkoxy group, R is a C₁₋₆ alkyl group, a is 2 or 3, b is 0 or 1, a+b is 3, and Q^{U} is a divalent C₁₋₂₀ organic group.
3. In the method for producing an oxyalkylene polymer (P) according to the above 1 or 2, the ratio of the total number of isocyanate groups of the compound (U) to the total number of hydroxyl groups of the polymer (pP) (isocyanate groups/hydroxyl groups) is from 0.8 to 1.05.
4. The method for producing an oxyalkylene polymer (P) according to any one of the above 1 to 3, wherein the double metal cyanide complex catalyst having an organic ligand is a double metal cyanide complex having an organic ligand used for ring-opening polymerization of a compound having an active hydrogen atom to an alkylene oxide.
5. The method for producing an oxyalkylene polymer (P) according to any one of the above 1 to 4, wherein the polymer (pP) is a polymer (pP1) obtained by subjecting a compound having an active hydrogen atom to ring-opening polymerization with an alkylene oxide, and the double metal cyanide complex catalyst having an organic ligand in the above production method is a double metal cyanide complex catalyst having an organic ligand used for producing the polymer (pP1).
6. The method for producing an oxyalkylene polymer (P) according to any one of the above 1 to 5, wherein the organic ligand of the double metal cyanide complex catalyst having an organic ligand is at least one member selected from the group consisting of ethylene glycol dimethyl ether (glyme), diethylene glycol dimethyl ether (diglyme), triethylene glycol dimethyl ether, tert-butyl alcohol, n-butyl alcohol, sec-butyl alcohol, iso-butyl alcohol, tert-pentyl alcohol, iso-pentyl alcohol and ethylene glycol mono-tert-butyl ether.
7. The method for producing an oxyalkylene polymer (P) according to any one of the above 1 to 5, wherein the organic ligand of the double metal cyanide complex catalyst having an organic ligand is ethylene glycol dimethyl ether (glyme) or tert-butyl alcohol.
8. The method for producing an oxyalkylene polymer (P) according to any one of the above 1 to 5, wherein the organic ligand of the double metal cyanide complex catalyst having an organic ligand is ethylene glycol dimethyl ether (glyme).

Also described is curable a composition comprising an oxyalkylene polymer (P) having a urethane bond and an alkoxysilyl group, which is obtained by the method as defined in any one of the above 1 to 8.

The curable composition may further contain at least one member selected from the group consisting of cobalt, zinc and iron, in a total content of from 15 to 50 ppm.

The curable composition may have a viscosity increase when the oxyalkylene polymer (P) is stored at 50°C for 4 weeks, is at most 20%.

### EFFECTS OF THE INVENTION

The curable composition obtained by the present invention is capable of forming a cured product excellent in physical properties such as storage stability, workability and tensile strength. Further, it is excellent in rapid curing property. The curable composition is useful as an adhesive, a sealing material, etc. to be used for various applications.

### BEST MODE FOR CARRYING OUT THE INVENTION

In the present specification, the number average molecular weight is shown as Mn, the weight average molecular weight as Mw, and the molecular weight distribution as Mw/Mn.

A polymer (pP) to be used for the production method of the present invention is a polymer having a polyoxyalkylene chain and a hydroxyl group.

The polyoxyalkylene chain in the polymer (pP) is made of preferably a polymerized unit of an oxyalkylene formed by ring-opening polymerization of a C₂₋₆ alkylene oxide, more preferably a polymerized unit of an oxyalkylene formed by ring-opening polymerization of at least one alkylene oxide selected from the group consisting of ethylene oxide, propylene oxide, butylene oxide and hexylene oxide, particularly preferably a polymerized unit of an oxyalkylene formed by ring-opening polymerization of propylene oxide. When the polyoxyalkylene chain is made of at least 2 types of oxyalkylene polymerized units, the sequence of at least 2 types of oxyalkylene polymerized units may be in a block form or a random form.

The hydroxyl group is preferably one located at the terminal of the polyoxyalkylene chain.

Mn per hydroxyl group of the polymer (pP) is preferably from 1,000 to 18,000, particularly preferably from 3,000 to 15,000.

The polymer (pP) is preferably a polymer (pP1) obtained by ring-opening polymerization of an alkylene oxide with a compound having an active hydrogen atom in the presence of the double metal cyanide complex having an organic ligand.

Here, the double metal cyanide complex having an organic ligand is the same one as the double metal cyanide complex having an organic ligand to be used as a catalyst for the urethanization reaction of the present invention, and it is preferably one having a skeleton of zinc hexacyanocobaltate or zinc hexacyanoferrate. The details will be described later.

The amount of the double metal cyanide complex having an organic ligand to be used for ring-opening polymerization of an alkylene oxide is preferably from 10 to 1,000 ppm, more preferably from 15 to 500 ppm, further preferably from 20 to 300 ppm.

The compound having an active hydrogen atom may be used alone or in combination of two or more of such compounds. The compound having an active hydrogen atom is preferably an organic compound having an active hydrogen atom, more preferably a compound having a hydroxyl group or an amino group, particularly preferably a compound having from 1 to 6 hydroxyl groups, particularly from 1 to 4 hydroxyl groups.

Specific examples of the organic compound having an active hydrogen atom may be an alcohol such as ethylene glycol, propylene glycol, dipropylene glycol, butanediol, hexamethylene glycol, bisphenol A hydride, neopentyl glycol, polybutadiene glycol, diethylene glycol, triethylene glycol, allyl alcohol, methallyl alcohol, glycerol, trimethylolmethane, trimethylolpropane or pentaerythritol; and a polymer form alcohol such as polyoxypropylene monool, polyoxypropylene diol, polyoxypropylene triol, polyoxyethylene monool, polyoxyethylene diol or polyoxyethylene triol. Mn per hydroxyl group of the polymer form alcohol is preferably from 300 to 2,000.

The compound having an active hydrogen atom may be used alone or in combination of two or more of such compounds. When at least two compounds having an active hydrogen atom are used, it is preferred to use a polymer form alcohol having two hydroxyl groups and a polymer form alcohol having 3 hydroxyl groups.

The polymerization temperature when the polymer (pP1) is produced, may be suitably selected, but it is usually preferably from 80 to 150°C.

In the present invention, it is possible to use one type of the polymer (pP) or two or more types of the polymer (pP).

A compound (U) to be used in the present invention is a compound having an alkoxysilyl group and an isocyanate group, preferably a compound represented by the following formula (1):

(X¹-)ₐ(R-)_{b}Si-Q^{U}-NCO (1)

wherein each X¹ is independently a C₁₋₆ alkoxy group, R is a C₁₋₆ alkyl group, a is 2 or 3, b is 0 or 1, a+b is 3, and Q^{U} is a divalent C₁₋₂₀ organic group.

In the formula (1), X¹ is preferably a methoxy group, an ethoxy group, a propoxy group, a butoxy group, a pentyloxy group or a hexyloxy group, particularly preferably a methoxy group. In the formula (1), 2 or 3 x¹s may be the same group or different groups, and they are preferably the same group. R is preferably a methyl group, an ethyl group, a propyl group, a butyl group, a pentyl group or a hexyl group, particularly preferably a methyl group. a is 2 or 3, preferably 3.

In the formula (1), Q^{U} is a divalent C₁₋₂₀ organic group.

Such a divalent organic group is preferably a C₁₋₁₄ alkylene group, more preferably a C₁₋₁₀ alkylene group, particularly preferably a C₁₋₅ alkylene group.

The divalent organic group is particularly preferably a trimethylene group or a methylene group.

Specific examples of the compound (U) may be 1-isocyanate methyl trimethoxysilane, 2-isocyanate ethyl trimethoxysilane, 3-isocyanate propyl trimethoxysilane, 3-isocyanate butyl trimethoxysilane, 3-isocyanate pentyl trimethoxysilane, 1-isocyanate methyl triethoxysilane, 2-isocyanate ethyl triethoxysilane, 3-isocyanate propyl triethoxysilane, 3-isocyanate butyl triethoxysilane, 3-isocyanate pentyl triethoxysilane, 1-isocyanate propyl trimethoxysilane, 1-isocyanate methyl dimethoxymethylsilane and 1-isocyanate propyl triethoxysilane, and 3-isocyanate propyl trimethoxysilane or 1-isocyanate methyl dimethoxymethylsilane is preferred.

In the present invention, the double metal cyanide complex catalyst having an organic ligand to be used for the urethanization reaction of the polymer (pP) with the compound (U) is preferably one having a skeleton of a double metal cyanide complex made of a combination of zinc and cobalt or a combination of zinc and iron. One having a skeleton of zinc hexacyanocobaltate or one having a skeleton of zinc hexacyanoferrate is particularly preferred.

The organic ligand is preferably an etheric ligand or an alcoholic ligand. Specific examples of the etheric ligand may be ethylene glycol dimethyl ether (glyme), diethylene glycol dimethyl ether (diglyme) and triethylene glycol dimethyl ether. Among them, ethylene glycol dimethyl ether (glyme) is preferred. Specific examples of the alcoholic ligand may be tert-butyl alcohol, n-butyl alcohol, sec-butyl alcohol, iso-butyl alcohol, tert-pentyl alcohol, iso-pentyl alcohol and ethylene glycol mono-tert-butyl ether. Among them, tert-butyl alcohol is preferred.

In the present invention, the double metal cyanide complex having an organic ligand to be used as a catalyst for the urethanization reaction is preferably in an activated state so that the polymer (pP) and the compound (U) will undergo the urethanization reaction.

The double metal cyanide complex catalyst having an organic ligand in an activated state may, for example, be a double metal cyanide complex having an organic ligand in a state where the alkylene oxide is subjected to ring-opening polymerization with the compound having an activated hydrogen atom in the presence of the double metal cyanide complex having an organic ligand, or a double metal cyanide complex having an organic ligand in a similar state. In such a case, the double metal cyanide complex having an organic ligand may be one immediately after the initiation of the ring-opening polymerization reaction of the alkylene oxide, one in the middle of the polymerization reaction or one after completion of the ring-opening the polymerization reaction.

In the present invention, the polymer (pP1) obtained by ring-opening polymerization of an alkylene oxide with a compound having an active hydrogen atom in the presence of the double metal cyanide complex catalyst having an organic ligand, is preferably used as it is without separation and removal of the double metal cyanide complex catalyst having an organic ligand used to produce the polymer (pP1), for the urethanization reaction of the compound (U) with the polymer (pP1). In such a case, there is an effect that the urethanization reaction efficiently proceeds. The polymer (pP1) composition containing the double metal cyanide complex catalyst having an organic ligand used to produce the polymer (pP1) may be used alone or in combination of at least two types thereof. When at least two types of the polymer (pP1) composition containing the double metal cyanide complex catalyst having an organic ligand used to produce the polymer (pP1), are used in combination, it is possible to adjust the amount of the contained the double metal cyanide complex catalyst having an organic ligand.

The amount of the double metal cyanide complex catalyst having an organic ligand to be used, may be an amount which is sufficient for the urethanization reaction to proceed, but based on the mass of the polymer (pP), it is preferably from 5 to 200 ppm, more preferably from 10 to 150 ppm, further preferably from 12 to 100 ppm, particularly preferably from 12 to 80 ppm, most preferably from 15 to 50 ppm, as calculated as a metal amount.

When the organic ligand is an alcoholic ligand, the amount of the double metal cyanide complex catalyst having an organic ligand used is, based on the mass of the polymer (pP), preferably from 15 to 45 ppm, particularly preferably from 15 to 25 ppm, as calculated as a metal amount. If it is less than 15 ppm, the urethanization reaction hardly proceeds, and if it exceeds 45 ppm, an isomerization reaction such as dimerization may sometimes take place during the urethanization reaction. If the isomerization reaction takes place, not only the viscosity of the obtained polymer becomes high, but increase of the viscosity during storage easily takes place.

When the organic ligand is an etheric ligand, the amount of the double metal cyanide complex catalyst having an organic ligand used is, based on the mass of the polymer (pP), preferably from 30 to 80 ppm, particularly preferably from 30 to 50 ppm, as calculated as a metal amount. If it is less than 30 ppm, the urethanization reaction hardly proceeds, and if it exceeds 80 ppm, the storage stability of the polymer becomes impaired.

As a promoter for the urethanization reaction, it is possible to use the following curing catalyst in addition to the double metal cyanide complex catalyst. The amount of such a catalyst to be used is, based on the mass of the polymer (pP), preferably at most 500 ppm, more preferably at most 200 ppm. If the amount to be used is in the above range, the storage stability of a product after the urethanization reaction will be excellent.

In the present invention, the ratio of total number of isocyanate groups of the compound (U) to the total number of hydroxyl groups of the polymer (pP) (isocyanate groups/hydroxyl groups) is from 0.80 to 1.05, preferably from 0.85 to 1.00. In such a range, there is an effect that the rapid curing property and storage stability of the curable composition containing the polymer (P) will be remarkably improved. The reason is not necessarily apparent, but in such a range, even if hydroxyl groups remain in the obtained polymer (P), the number of the hydroxyl groups is small, whereby the number of an alcohol exchange reaction with alkoxysilyl groups is small. Thus, the storage stability of the polymer (P) and the rapid curing property of the polymer (P) after the storage can be maintained. Further, a side reaction in the urethanization reaction (an allophanate-forming reaction, an isocyanurate-forming reaction, etc.) is suppressed, whereby it is considered that a byproduct is hardly formed, and the viscosity of the curable composition hardly increases.

The temperature for the urethanization reaction is preferably from 20 to 200°C, more preferably from 50 to 150°C, particularly preferably from 50 to 120°C. Further, the urethanization reaction is preferably carried out under an atmosphere of an inert gas (a nitrogen gas is preferred) .

The polymer (P) obtained by the urethanization reaction can be formed into a curable composition of the present invention as it is without separating or removing the double metal cyanide complex catalyst having an organic ligand.

The method of the present invention provides a curable composition containing the polymer (P) obtained by the above production method. The curable composition obtained by the present invention is excellent in the storage stability without separating and removing the double metal cyanide complex catalyst having an organic ligand.

Into the curable composition obtained by the present invention, it is preferred to incorporate at least one member selected from the group consisting of cobalt, zinc and iron, in a total content of from 15 to 50 ppm.

Cobalt, zinc and iron are preferably cobalt, zinc and iron derived from the double metal cyanide complex catalyst, particularly preferably zinc hexacyanocobaltate or zinc hexacyanoferrate.

The viscosity increase when the polymer (P) is stored at 50°C for 4 weeks, is preferably at most 20%, more preferably at most 15%, further preferably at most 12%, particularly preferably at most 10%.

When the curable composition obtained in the present invention is to be cured, it is possible to incorporate a curing catalyst.

Such a curing catalyst is not particularly limited as long as it is a compound to catalyze a crosslinking reaction by a hydrolysis reaction of alkoxysilyl groups of the polymer (P). Specific examples of the curing catalyst may be an organic tin compound, an organic metal compound containing a metal other than tin, a metal organic alkoxide, a complex containing a metal other than tin, an organic amine and other catalysts.

Specific examples of the organic tin compound may be an organic tin carboxylate such as dibutyltin diacetate, dibutyltin dilaurate, dioctyltin dilaurate, (n-C₄H₉)₂Sn(OCOCH=CHCOOCH₃)₂, (n-C₄H₉)₂Sn(OCOCH=CHCOO(n-C₄H₉))₂, (n-C₈H₁₇)₂Sn(OCOCH=CHCOOCH₃)₂, (n-C₈H₁₇)₂Sn(OCOCH=CHCOO(n-C₄H₉))₂ or (n-C₈H₁₇)₂Sn(OCOCH=CHCOO(iso-C₈H₁₇))₂; an organic tin compound containing a sulfur atom such as (n-C₄H₉)₂Sn(SCH₂COO), (n-C₈H₁₇)₂Sn(SCH₂COO), (n-C₈H₁₇)₂Sn(SCH₂CH₂COO), (n-C₈H₁₇)₂Sn(SCH₂COOCH₂CH₂OCOCH₂S), (n-C₄H₉)₂Sn (SCH₂COO (iso-C₈H₁₇))₂, (n-C₈H₁₇)₂Sn(SCH₂COO(iso-C₈H₁₇))₂, (n-C₈H₁₇)₂Sn(SCH₂COO(n-C₈H₁₇))₂ or (n-C₄H₉) ₂SnS, (C₈H₁₇)₂Sn(SCH₂COOC₈H₁₇)₂; an organic tin oxide compound such as (n-C₄H₉) ₂SnO or (n-C₈H₁₇) ₂SnO; a reaction product obtained by reacting an organic tin oxide with an ester (e.g. ethyl silicate, dimethyl meleate, diethyl maleate, dioctyl maleate, dimethyl phthalate, diethyl phthalate, dioctyl phthalate); a chelate of an organic tin compound such as (n-C₄H₉)₂Sn(acac)₂, (n-C₈H₁₇)₂Sn(acac)₂, (n-C₄H₉)₂Sn(OC₈H₁₇)(acac), (n-C₄H₉)₂Sn(etac)₂, (n-C₈H₁₇)₂Sn(etac)₂, (n-C₄H₉)₂Sn(OC₈H₁₇) (etac) or tin bisacetyl acetonate; a reaction product obtained by reacting a chelate of an organic tin compound with an alkoxysilane (tetramethoxysilane, tetraethoxysilane, tetrapropoxysilane, etc.); an organic tin compound having a -SnOSn- bond such as (n-C₄H₉)₂(CH₃COO)SnOSn(OCOCH₃) (n-C₄H₉)₂ or (n-C₄H₉)₂(CH₃O)SnOSn (OCH₃) (n-C₄H₉)₂;and a divalent tin carboxylate such as tin 2-ethylhexanoate, tin n-octylate, tin naphthanate or tin stearate. Here, acac is an acetylacetonate ligand, and etac is an ethyl acetoacetate ligand (the same applies hereinafter).

Specific examples of an organic metal compound containing a metal other than tin may be calcium carboxylate, zirconium carboxylate, iron carboxylate, vanadium carboxylate, bismuth carboxylate such as bismuth tris-2-ethyl hexoate, lead carboxylate, titanium carboxylate and nickel carboxylate.

Specific examples of an organic metal alkoxide may be a titanium alkoxide such as tetraisopropyl titanate, tetrabutyl titanate, tetramethyl titanate or tetra(2-ethylhexyl titanate); an aluminum alkoxide such as aluminum isopropylate or mono-sec-butoxyaluminum diisopropylate; a zirconium alkoxide such as zirconium-n-propylate or zirconium-n-butyrate; and a titanium alkoxide such as titanium tetraacetylacetonate, titanium ethylacetoacetate, titanium octylene glycolate or titanium lactate.

Specific examples of the compound containing a metal other than tin may be an aluminum chelate such as aluminum trisacetylacetonate, aluminum trisethylacetoacetate or diisopropoxyaluminum ethylacetoacetate; and a zirconium chelate such as zirconium tetraacetylacetonate, zirconium bisacetylacetonate, zirconium acetylacetonate bisethylacetoacetate or zirconium acetate.

Specific examples of an organic amine may be an aliphatic monoamine such as butylamine, hexylamine, octylamine, decylamine or laurylamine; an aliphatic diamine such as ethylenediamine or hexanediamine; an aliphatic polyamine such as triethylamine, diethylene triamine, triethylene tetramine or tetraethylenepentamine; a heterocyclic amine such as piperidine or piperazine; an aromatic amine such as methaphenylenediamine; an alkanolamine such as monoethanolamine, diethanolamine or triethanolamine; and various modified amines to be used for curing an epoxy resin.

Specific examples of other curing catalysts may be phosphoric acid, p-toluene sulfonic acid and phthalic acid.

The curing catalyst is preferably an organic tin compound from the viewpoint of handling efficiency. From the viewpoint of rapid curing property, it is particularly preferably (n-C₄H₉)₂Sn(acac)_{2,} (n-C₈H₁₇)₂Sn (acac)₂, (n-C₄H₉)₂Sn(OC₈H₁₇) (acac), (n-C₄H₉)₂Sn(etac)₂ or (n-C₈H₁₇)₂Sn(etac)₂.

Further, by properly selecting the curing catalyst, it is possible to control the curing rate of the curable composition. For example, by selecting a catalyst having a low activity as a curing catalyst, it is possible to lower the curing rate of the curable composition of the present invention.

A specific example of the catalyst having a low activity may be a specific organic tin compound containing a sulfur atom in a ligand (e.g. tradename: UL-29, manufactured by Crompton Corporation or tradename: Neostann U-860 manufactured by Nitto Kasei Co., Ltd.).

The curable composition obtained by the present invention may contain one type of curing catalyst or two types or more of curing catalysts. When two types or more of curing catalysts are contained, since the curable composition of the present invention is excellent in curing property, an organic tin compound and an organic amine are preferably contained.

The curable composition preferably contains from 0.001 to 10 parts by mass of the curing catalyst, based on 100 parts by mass of the polymer (P). In such a case, there are effects that the curing rate is high, that foaming at the time of curing is suppressed, and further that the durability of the cured product is excellent.

The curable composition may further contain at least one additive selected from the group consisting of a filler, a plasticizer, an adhesive-promoter agent, a solvent, a dehydrating agent, a thixotropic agent, an anti aging agent and a pigment.

Specific examples of the filler may be calcium carbonate, silica, silicic anhydride, carbon black, magnesium carbonate, diatomaceous earth, clay, talc, titanium oxide, bentonite, ferric oxide, zinc oxide, charcoal, pulp, a cotton chip, mica, a walnut shell powder and a rice hull powder. The filler may be a fine powder or a tiny hollow body (e.g. a silica balloon, a silas balloon, a glass balloon or a resin balloon). The curable composition may contain one type of the filler or two or more types of the fillers.

Calcium carbonate is preferably a calcium carbonate having the surface treated with an aliphatic acid or a resin acid. Calcium carbonate is preferably colloidal calcium carbonate having an average particle size of at most 1 µm, light calcium carbonate having an average particle size of from 1 to 3 µm or heavy calcium carbonate having an average particle size of from 1 to 20 µm.

The curable composition contains a filler in an amount of preferably at most 1,000 parts by mass, particularly preferably from 50 to 250 parts by mass, based on 100 parts by mass of the polymer (P).

The plasticizer may, for example, be a phthalate such as dioctyl phthalate, dibutyl phthalate or butyl benzyl phthalate; an aliphatic carboxylate such as dioctyl adipate, bis(2-methylnonyl) succinate, dibutyl sebacate or butyl oleate; an alcohol ester such as pentaerythritol ester; a phosphate such as trioctyl phosphate or tricresyl phosphate; an epoxy plasticizer such as dioctyl 4,5-epoxyhexahydro phthalate or benzyl epoxy stearate; chlorinated paraffin; a polyester plasticizer obtained by reacting a dibasic acid with a divalent alcohol; a polyether plasticizer such as polyoxypropylene glycol; a styrene plasticizer such as poly-α-methylstyrene or polystyrene; or a polymer plasticizer such as polybutadiene, a butadiene/acrylonitrile copolymer, polychloroprene, polyisopurene, polybutene, hydrogenated polybutene or an epoxidized polybutadiene.

The curable composition preferably contains the plasticizer in an amount of at most 300 parts by mass, particularly preferably from 20 to 150 parts by mass, based on 100 parts by mass of the polymer (P).

Specific examples of the adhesive-promoter agent in the present invention may be an organic silane coupling agent such as silane having a (meth)acryloyloxy group, silane having an amino group, silane having an epoxy group or silane having a carboxyl group; an organic metal coupling agent such as isopropyltri(N-aminoethyl-aminoethyl)propyltrimethoxytitanate or 3-mercaptopropyltrimethoxytitanate; and an epoxy resin.

Specific examples of the silane having a (meth)acryloyloxy group may be 3-methacryloyloxypropyl trimethoxysilane, 3-acryloyloxypropyl trimethoxysilane and 3-methacryloyloxypropyl methyl dimethoxysilane.

Specific examples of the silane having an amino group may be 3-aminopropyl trimethoxysilane, 3-aminopropyl triethoxysilane, 3-aminopropyl methyl dimethoxysilane, N-(2-aminoethyl)-3-aminopropyl trimethoxysilane, N-(2-aminoethyl)-3-aminopropyl methyl dimethoxysilane, N-(2-aminoethyl)-3-aminopropyl triethoxysilane, 3-ureidopropyl triethoxysilane, N-(N-vinylbenzyl-2-aminoethyl)-3-aminopropyl trimethoxysilane and 3-anilinopropyl trimethoxysilane.

Specific examples of the silane having an epoxy group may be 3-glycidyl oxypropyl trimethoxysilane, 3-glycidyl oxypropyl methyl dimethoxysilane and 3-glycidyl oxypropyl triethoxysilane.

Specific examples of the silane having a carboxy group may be 2-carboxyethyl triethoxysilane, 2-carboxyethyl phenylbis(2-methoxyethoxy)silane and N-(N-carboxylmethyl-2-aminoethyl)-3-aminopropyl trimethoxysilane.

Further, it is possible to use a reaction product obtained by reacting at least two types of silane coupling agents. The reaction product may be a reaction product obtained by reacting a silane having an amino group with a silane having an epoxy group, a reaction product obtained by reacting a silane having an amino group with a silane having a (meth)acryloyloxy group, a reaction product obtained by reacting a silane having an epoxy group with a silane having a mercapto group, or a reaction product of a silane having various mercapto groups.

Specific examples of the epoxy resin may be a bisphenol A-diglycidyl ether type epoxy resin, a bisphenol F-diglycidyl ether type epoxy resin, a tetrabromobisphenol A-glycidyl ether type epoxy resin, a novolac type epoxy resin, a hydrogenated bisphenol A type epoxy resin, a glycidyl ether type epoxy resin of a bisphenol A-propylene oxide adduct, glycidyl 4-glycidyl oxy benzoate, diglycidyl phthalate, diglycidyl tetrahydro phthalate, diglycidyl hexahydro phthalate, a diglycidyl ester type epoxy resin, an m-aminophenol type epoxy resin, a diaminodiphenylmethane type epoxy resin, a urethane modified epoxy resin, N,N-diglycidyl aniline, N,N-diglycidyl-o-toluidine, triglycidyl isocyanurate, polyalkylene glycol diglycidyl ether, glycidyl ether of a polyhydric alcohol (e.g. glycerol), a hydantoin type epoxy resin and an unsaturated polymer epoxy resin (a petroleum resin).

When the curable composition contains the above silane coupling agent, the silane coupling agent is preferably contained in an amount of from more than 0 to 30 parts by mass, based on 100 parts by mass of the polymer (P). When the curable composition of the present invention contains the above epoxy resin, the epoxy resin is preferably contained in an amount of at most 100 parts by mass based on 100 parts by mass of the polymer (P).

Specific examples of the solvent may be an aliphatic hydrocarbon, aromatic hydrocarbon, halogenated hydrocarbon, alcohol, ketone, ester, ether, ester alcohol, ketone alcohol, ether alcohol, ketone ether, ketone ester and ester ether. When an alcohol is used, the preservation stability of the curable composition will be improved. The alcohol is preferably a C₁₋₁₀ alkyl alcohol, more preferably, methanol, ethanol, isopropanol, isopentyl alcohol or hexyl alcohol, particularly preferably methanol or ethanol.

When the curable composition obtained by the present invention contains a solvent, the solvent is preferably contained in an amount of at most 500 parts by mass based on 100 parts by mass of the polymer (P).

Specific examples of the dehydrating agent in the present invention may be a trialkyl orthoformate such as trimethyl orthoformate, a triethyl orthoformate, tripropyl orthoformate or tributyl orthoformate; and a trialkyl orthoacetate such as trimethyl orthoacetate, triethyl orthoacetate, tripropyl orthoacetate or tributyl orthoacetate.

When the curable composition contains the solvent, the dehydrating agent is preferably contained in an amount of from 0.001 to 30 parts by mass based on 100 parts by mass of the polymer (P) .

Specific examples of the thixotropic agent in the present invention may be a hydrogenated castor oil and a fatty acid amide.

Specific examples of the anti aging agent in the present invention may be an antioxidant for a polyurethane resin, an ultraviolet absorber and a light stabilizer. Specific examples of the anti aging agent may be anti aging agent of a hindered amine type, a benzotriazole type, a benzophenone type, a benzoate type, a cyanoacrylate type, an acrylate type, a hindered phenol type, a phosphorus type and a sulfur type.

Specific examples of the pigment in the present invention may be an inorganic pigment such as ferric oxide, chrome oxide or titanium oxide; and an organic pigment such as phthalocyanine blue or phthalocyanine green.

A method for producing the curable composition is not particularly limited. For example, when 100 parts by mass of the polymer (P) and the above curing catalyst, filler, adhesive-promoter agent, solvent, thixotropic agent, anti aging agent and pigment (hereinafter referred to as other components) are contained, the order of blending other components is not particularly limited, but it is preferred that the curing catalyst is mixed after mixing the curable composition of the present invention with other components other than the curing catalyst.

Further, a method for curing the curable composition is not particularly limited, and it is preferred to use a method for curing a one-pack type curable composition wherein the curable composition of the present invention and desired other components are mixed, and the mixture is sealed and preserved, and the curable composition is cured by moisture in air at the time of use, or a method for curing a two-pack type curable composition wherein the curable composition of the present invention and desired other components are mixed at the time of use, and the mixture is properly cured.

The curable composition has high curing property and storage stability, and it is capable of forming a cured product having suitable mechanical properties. The curable composition of the present invention is useful as a sealant for construction, a water proof material, an adhesion or a coating agent as a curable composition for covering and sealing, particularly useful as an adhesive.

A preferred usage mode of an adhesion made of the curable composition of the present invention is a one-pack type curable adhesive wherein the curable composition of the present invention and desired other components are mixed, and the mixture is sealed and preserved, and the adhesive is cured by moisture in air at the time of use, or a two-pack type curing type adhesive wherein the curable composition of the present invention and desired other components are mixed and cured at the time of use.

### EXAMPLES

Now, the present invention will be described in further detail with reference to Examples, but it should be understood that the present invention is by no means restricted thereto.

The ratio of the total amount of isocyanate groups of the compound (U) to the total amount of hydroxyl groups of the polymer (pP) is referred to as NCO/OH. The total amount of hydroxyl groups of the polymer (pP) is calculated by hydroxyl group values (mgKOH/g) measured in accordance with JIS K1557 6.4.

The molecular weight and molecular weight distribution were measured by a gel permeation chromatography method (standard: polystyrene).

### EXAMPLE 1

Into a 10,000 mL stainless steel pressure-proof reactor equipped with a stirrer, as an initiator, 500 g of polyoxypropylene diol (Mn=1,000) and as a catalyst, 500 mg of a double metal cyanide complex of zinc hexacyanocobaltate having tert-butyl alcohol as a ligand, were introduced. After the reactor was flushed with nitrogen, the temperature was raised to 140°C, and 50 g of propylene oxide was supplied into the reactor to carry out a reaction. After the pressure inside of the reactor decreased, 4,500 g of propylene oxide was supplied into the reactor at a rate of about 80 g/hr. The propylene oxide was supplied over a period of 6 hours 20 minutes, followed by continuous stirring for further 1 hour. During that time, the temperature inside of the reactor was kept at 140°C, and the stirring rate was kept at 300 rpm to let the reaction proceed. The polyether polyol (polyol A) obtained by such a reaction had a number average molecular weight (Mn) of 10,000 and a molecular weight distribution Mw/Mn of 1.091. The remaining amount of the double metal cyanide complex was measured by an atomic absorption method. The remaining amount of the double metal cyanide complex consisted of 15.6 ppm of zinc and 6.7 ppm of cobalt.

2,000 g of polyether polyol (polyol A) containing the above remaining double metal cyanide complex was introduced in a 3,000 mL pressure-proof reactor, and the reactor was heated to 110°C to carry out vacuum dehydration. Then, the reactor was flushed with nitrogen and was cooled to 50°C. Into the reactor, 86.5 g of γ-isocyanate propyltrimethoxysilane (purity: 95%) was added so that NCO/OH (molar ratio) became 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer A) having a number average molecular weight of 11,000 and a molecular weight distribution Mw/Mn=1.095 and having a trimethoxysilyl group at the terminal.

### EXAMPLE 2

A polyether polyol (polyol B) was obtained in the same manner as in Example 1 except that the double metal cyanide complex of zinchexacyanocobaltate having tert-butyl alcohol as a ligand was changed to 350 mg. Such a polyether polyol (polyol B) had a number average molecular weight (Mn) of 10,000 and a molecular weight distribution Mw/Mn of 1.091. The remaining amount of the double metal cyanide complex consisted of 11.3 ppm of zinc and 4.8 ppm of cobalt.

2,000 g of polyether polyol (polyol B) containing the above remaining double metal cyanide complex was introduced in a 3,000 mL pressure-proof reactor, and the reactor was heated to 110°C to carry out vacuum dehydration. Then, the reactor was flushed with nitrogen and was cooled to 50°C. Into the reactor, 86.4 g of γ-isocyanate propyltrimethoxysilane (purity: 95%) was added so that NCO/OH (molar ratio) became 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer A) having a number average molecular weight of 11,000 and a molecular weight distribution Mw/Mn=1.094 and having a trimethoxysilyl group at the terminal.

### EXAMPLE 3

A polyether polyol (polyol C1) was obtained in the same manner as in Example 1 except that the double metal cyanide complex of zinchexacyanocobaltate having tert-butyl alcohol as a ligand was changed to 200 mg. Such a polyether polyol (polyol C1) had a number average molecular weight (Mn) of 10,000 and a molecular weight distribution Mw/Mn of 1.091. The catalyst amount of the double metal cyanide complex consisted of 7.9 ppm of zinc and 3.4 ppm of cobalt.

A polyether polyol (polyol C2) was obtained in the same manner as in Example 1 except that the double metal cyanide complex of zinchexacyanocobaltate having glyme as a ligand was changed to 1,000 mg. Such a polyether polyol (polyol C2) had a number average molecular weight (Mn) of 10,000 and a molecular weight distribution Mw/Mn of 1.150. The catalyst amount of the double metal cyanide complex consisted of 28.7 ppm of zinc, and 12.3 ppm of cobalt.

The polyol C1 and the polyol C2 were mixed in a mass ratio of 40:60, to obtain a polyol C.

2,000 g of polyether polyol (polyol C) containing the above remaining double metal cyanide complex was introduced in a 3,000 mL pressure-proof reactor, and the reactor was heated to 110°C to carry out vacuum dehydration. Then, the reactor was flushed with nitrogen and was cooled to 50°C. Into the reactor, 86.7 g of γ-isocyanate propyltrimethoxysilane (purity: 95%) was added so that NCO/OH (molar ratio) became 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer C) having a number average molecular weight of 11,000 and a molecular weight distribution Mw/Mn=1.180 and having a trimethoxysilyl group at the terminal.

### EXAMPLE 4

2,000 g of polyether polyol (polyol C2) containing remaining double metal cyanide complex was introduced in a 3,000 mL pressure-proof reactor, and the reactor was heated to 110°C to carry out vacuum dehydration. Then, the reactor was flushed with nitrogen and was cooled to 50°C. Into the reactor, 86.7 g of γ-isocyanate propyltrimethoxysilane (purity: 95%) was added so that NCO/OH (molar ratio) became 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer D) having a number average molecular weight of 11,000 and a molecular weight distribution Mw/Mn=1.184 and having a trimethoxysilyl group at the terminal.

### EXAMPLE 5

A polyether polyol (polyol D) was obtained in the same manner as in Example 1 except that, as an initiator, 300 g of polyoxypropylene diol (Mn=1,000) and as a catalyst, 970 mg of the double metal cyanide complex of zinchexacyanocobaltate having glyme as a ligand, were used. Such a polyether polyol (polyol D) had a number average molecular weight (Mn) of 15,500 and a molecular weight distribution Mw/Mn of 1.190. The remaining amount of the double metal cyanide complex consisted of 21.5 ppm of zinc, and 9.2 ppm of cobalt.

2,000 g of polyether polyol (polyol D) containing the above remaining double metal cyanide complex was introduced in a 3,000 mL pressure-proof reactor, and the reactor was heated to 110°C to carry out vacuum dehydration. Then, the reactor was flushed with nitrogen and was cooled to 50°C. Into the reactor, 55.1 g of γ-isocyanate propyltrimethoxysilane (purity: 95%) was added so that NCO/OH (molar ratio) became 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer E) having a number average molecular weight of 17,000 and a molecular weight distribution Mw/Mn=1.244 and having a trimethoxysilyl group at the terminal.

### COMPARATIVE EXAMPLE 1

2,000 g of the polyol C1 obtained in Example 3 was introduced in a 3,000 mL pressure-proof reactor, and the reactor was heated to 110°C to carry out vacuum dehydration. Then, after the reactor was flushed with nitrogen, it was cooled to 50°C, and 50 ppm of dibutyltin dilaurate (DBTDL) was added thereto. To the reactor, 55.1g of γ-isocyanate propyltrimethoxysilane (purity: 95%) was added so that NCO/OH (molar ratio) becomes 0.97, followed by heating to 80°C in the presence of a catalyst of the remaining double metal cyanide complex and keeping for 8 hours to carry out a urethanization reaction. With respect to the obtained polymer, disappearance of an isocyanate peak was confirmed by FT-IR, followed by cooling to normal temperature thereby to obtain a polymer (polymer F) having a number average molecular weight of 11,000 and a molecular weight distribution Mw/Mn=1.136 and having a trimethoxysilyl group at the terminal.

### EVALUATION OF PHYSICAL PROPERTIES OF CURABLE COMPOSITION

### I. Example of Measuring Viscosity Increase of Curable Composition

A measurement of viscosity increase of each of polymers A to F was carried out. The measurement of viscosity increase was carried out by using a B-type viscometer (used rotor: No. 6, measurement temperature: 25°C and number of revolutions: 10.5 rpm). The viscosity increase was calculated by measuring viscosity of the polymer immediately after the preparation as an initial stage viscosity (mPa·s) and measuring viscosity of the polymer after it was stored at 50°C for 1 week, 2 weeks, 3 weeks and 4 weeks, respectively, as a later stage viscosity.

The viscosity increase shows a % value of that (later stage viscosity-initial stage viscosity/initial stage viscosity. The results are shown in Table 1.

**TABLE 1**

| | | | Ex. 1 | Ex. 2 | Ex. 3 | Ex. 4 | Ex. 5 | Comp Ex. 1 |
|---|---|---|---|---|---|---|---|---|
| Raw material polyol for urethanization reaction | | | | | | | | |
| | Polyol A | | 100 | | | | | |
| | Polyol B | | | 100 | | | | |
| | Polyol C1 | | | | 40 | | | 100 |
| | Polyol C2 | | | | 60 | 100 | | |
| | Polyol D | | | | | | 100 | |
| Remaining amount of double metal cyanide complex catalyst in polyol | | | | | | | | |
| | Remaining amount of zinc (ppm) | | 15.6 | 11.3 | 20.4 | 28.7 | 21.5 | 7.9 |
| | Remaining amount of cobalt (ppm) | | 6.7 | 4.8 | 8.7 | 12.3 | 9.2 | 3.4 |
| | Remaining amount of metal (ppm) | | 22.3 | 16.1 | 29.1 | 41.0 | 30.7 | 11.3 |
| Amount of conventional urethane-forming catalyst | | | | | | | | |
| | DBTDL (ppm) | | | | | | | 50 |
| Molar ratio of γ-isocyanate propyltrimethoxysilane to OH group of polyol | | | 0.97 | 0.97 | 0.97 | 0.97 | 0.97 | 0.97 |

| Urethanized polymer (P) | | | Polymer A | Polymer B | Polymer C | Polymer D | Polymer E | Polymer F |
|---|---|---|---|---|---|---|---|---|
| Viscosity (mPa·s) | | Initial | 7520 | 7440 | 7430 | 7530 | 19010 | 7460 |
| | | After 1 week (50°C) | 7540 | 7540 | 7550 | 7560 | 19150 | 7980 |
| | | After 2 weeks (50°C) | 7650 | 7620 | 7620 | 7680 | 19240 | 8430 |
| | | After 3 weeks (50°C) | 7760 | 7740 | 7760 | 7870 | 19500 | 8790 |
| | | After 4 weeks (50°C) | 7860 | 7840 | 7820 | 7940 | 19970 | 9340 |
| Viscosity increase | | After 1 week (50°C) | 0% | 1% | 2% | 0% | 1% | 7% |
| | | After 2 weeks (50°C) | 2% | 2% | 3% | 2% | 1% | 12% |
| | | After 3 weeks (50°C) | 3% | 4% | 4% | 5% | 3% | 18% |
| | | After 4 weeks (50°C) | 5% | 5% | 5% | 5% | 5% | 25% |

### II. Example of tensile test of curable composition

To 100 parts by mass of each polymers A to F, 75 parts by mass of surface-treating calcium carbonate (HAKUENKA CCR, manufactured by Shiraishi Kogyo Kaisha, Ltd.) as a filler, 75 parts by mass of heavy calcium carbonate (WHITON SB, manufactured by SHIRAISHI CALCIUM KAISHA, LTD.) as a filler, 40 parts by mass of bis-2-ethylhexyl phthalate (DOP) as a plasticizer and 3 parts by mass of hydrogenated castor oil (DISPARLON 6500, manufactured by Kusumoto Chemicals, Ltd.) as a thixotropic agent were added, followed by stirring and mixing by a planetary stirrer (manufactured by Kurabo Industries Ltd.). Then, the temperature was lowered to 25°C, and 1 part by mass of vinyl trimethoxysilane (KBM-1003, manufactured by Shin-Etsu Chemical Co., Ltd.) and 1 part by mass of 3-glycidyl oxypropyl trimethoxysilane (KBM-403, manufactured by Shin-Etsu Chemical Co., Ltd.) were added to the mixture, followed by stirring and mixing. Further, 1 part by mass of dibutyltin dilaurate (DBTDL) as a curing catalyst was added thereto, followed by stirring and mixing to obtain each of curable compositions (1) to (6).

The tensile test was carried out with respect to each of the curable compositions (1) to (6). The tensile test was carried out in accordance with JIS K6251. Specifically, the curable composition was used to form a sheet having a thickness of 2 mm, and it was cured and aged at 23°C with humidity of 50% for 7 days, then it was aged at 50°C with humidity of 65% for 7 days. Further, it was left to stand at 23°C with humidity of 50% for at least 24 hours, and then it was punched out into a form of No. 3 dumbbell. After the thickness was measured, by using a tensilon tester, 50% tensile stress (N/mm²), (hereinafter referred to as M50), tensile stress (N/mm²) (hereinafter referred to as Tmax) and elongation (%) at the maximum stress (hereinafter referred to as E) were measured. The results are shown in Table 2.

**TABLE 2**

| | | Ex. 1 | Ex. 2 | Ex. 3 | Ex. 4 | Ex. 5 | Comp. Ex. 1 |
|---|---|---|---|---|---|---|---|
| Blending composition (parts by mass) | Polymer A | 100 | | | | | |
| | Polymer B | | 100 | | | | |
| | Polymer C | | | 100 | | | |
| | Polymer D | | | | 100 | | |
| | Polymer E | | | | | 100 | |
| | Polymer F | | | | | | 100 |
| | HAKUENKA CCR | 75 | 75 | 75 | 75 | 75 | 75 |
| | WHITON SB | 75 | 75 | 75 | 75 | 75 | 75 |
| | DOP | 40 | 40 | 40 | 40 | 40 | 40 |
| | DISPARLON 6500 | 3 | 3 | 3 | 3 | 3 | 3 |
| | KBM1003 | 3 | 3 | 3 | 3 | 3 | 3 |
| | KBM403 | 1 | 1 | 1 | 1 | 1 | 1 |
| | DBTDL | 1 | 1 | 1 | 1 | 1 | 1 |
| Types of curable composition | | (1) | (2) | (3) | (4) | (5) | (6) |
| Tensile test | Elongation (%) | 116 | 116 | 117 | 118 | 477 | 114 |
| | M50 (N/mm²) | 0.82 | 0.82 | 0.84 | 0.81 | 0.3 | 0.83 |
| | Tmax (N/mm²) | 1.28 | 1.27 | 1.30 | 1.27 | 1.14 | 1.22 |

According to the above results, the curable composition containing the polymer (P) has low viscosity increase and an excellent storage stability, whereby it is evident that a cured product obtained by curing the curable composition is excellent in strength.

### INDUSTRIAL APPLICABILITY

The curable composition obtainable by the present invention is a curable composition having a rapid curing property and an excellent storage stability, which is capable of forming a cured product excellent in mechanical strength. The curable composition is useful as an adhesive to be used in a field such as a sealing material (an elastic sealing material sealant for construction, a sealing material for a multilayered glass, etc.), a sealing agent (a sealing agent for rust prevention and water prevention of the terminal portion of a glass, a sealing agent of the backside of a solar cell, etc.) or an electrical insulation material (an insulating coating agent for an electrical wire and a cable). Further, the curable composition is also useful as a tackifier, a coating material, a film material, a gasket material and a casting material.

## Claims

1. A method for producing an oxyalkylene polymer (P) having a urethane bond and an alkoxysilyl group, which comprises subjecting a polymer (pP) having a polyoxyalkylene chain and a hydroxyl group and a compound (U) having an alkoxysilyl group and an isocyanate group, to a urethanization reaction in the presence of a double metal cyanide complex catalyst having an organic ligand;
wherein the ratio of the total number of isocyanate groups of the compound (U) to the total number of hydroxyl groups of the polymer (pP) (isocyanate groups/hydroxyl groups) is from 0.8 to 1.05.

2. The method for producing an oxyalkylene polymer (P) according to Claim 1, wherein the compound (U) is a compound represented by the following formula (1), and the oxyalkylene polymer (P) is a polymer having a group represented by the following formula (2):
(X¹-)ₐ(R-)_{b}Si-Q^{U}-NCO (1)
(X¹-)ₐ(R-)_{b}Si-Q^{U}-NHCOO- (2)
wherein each X¹ is independently a C₁₋₆ alkoxy group, R is a C₁₋₆ alkyl group, a is 2 or 3, b is 0 or 1, a+b is 3, and Q^{U} is a divalent C₁₋₂₀ organic group.

3. The method for producing an oxyalkylene polymer (P) according to any one of Claims 1 or 2, wherein the double metal cyanide complex catalyst having an organic ligand is a double metal cyanide complex having an organic ligand used for ring-opening polymerization of a compound having an active hydrogen atom to an alkylene oxide.

4. The method for producing an oxyalkylene polymer (P) according to any one of Claims 1 or 2, wherein the polymer (pP) is a polymer (pP1) obtained by subjecting a compound having an active hydrogen atom to ring-opening polymerization with an alkylene oxide, and the double metal cyanide complex catalyst having an organic ligand according to any one of Claims 1 to 3 is a double metal cyanide complex catalyst having an organic ligand used for producing the polymer (pP1).

5. The method for producing an oxyalkylene polymer (P) according to any one of Claims 1 to 4, wherein the organic ligand of the double metal cyanide complex catalyst having an organic ligand is at least one member selected from the group consisting of ethylene glycol dimethyl ether (glyme), diethylene glycol dimethyl ether (diglyme), triethylene glycol dimethyl ether, tert-butyl alcohol, n-butyl alcohol, sec-butyl alcohol, iso-butyl alcohol, tert-pentyl alcohol, iso-pentyl alcohol and ethylene glycol mono-tert-butyl ether.

6. The method for producing an oxyalkylene polymer (P) according to any one of Claims 1 to 4, wherein the organic ligand of the double metal cyanide complex catalyst having an organic ligand is ethylene glycol dimethyl ether (glyme) or tert-butyl alcohol.

7. The method for producing an oxyalkylene polymer (P) according to any one of Claims 1 to 4, wherein the organic ligand of the double metal cyanide complex catalyst having an organic ligand is ethylene glycol dimethyl ether (glyme).

## Patentansprüche

1. Verfahren zur Herstellung eines Oxyalkylen-Polymers (P) mit einer Urethanbindung und einer Alkoxysilylgruppe, umfassend Durchführen einer Urethanisierungsreaktion mit einem Polymer (pP) mit einer Polyoxyalkylenkette und einer Hydroxylgruppe und einer Verbindung (U) mit einer Alkoxysilylgruppe und einer Isocyanatgruppe in Gegenwart eines Doppelmetall-Cyanid-Komplexkatalysators, der einen organischen Liganden aufweist;
worin das Verhältnis der Gesamtzahl an Isocyanatgruppen der Verbindung (U) zur Gesamtzahl an Hydroxylgrupen des Polymers (pP) (Isocyanatgruppen/Hydroxylgruppen) von 0,8 bis 1,05 beträgt.

2. Das Verfahren zur Herstellung eines Oxyalkylen-Polymers (P) gemäß Anspruch 1, worin die Verbindung (U) eine Verbindung der folgenden Formel (1) ist und das Oxyalkylen-Polymer (P) ein Polymer ist, das eine Gruppe der folgenden Formel (2) aufweist:
(X¹-)ₐ(R-)_{b}Si-Q^{u}-NCO (1)
(X¹-)ₐ(R-)_{b}Si-Q^{u}-NHCOO- (2)
worin X¹ jeweils unabhängig eine C₁₋₆ Alkoxygruppe ist, R eine C₁₋₆ Alkylgruppe ist, a 2 oder 3, b 0 oder 1, a+b 3, und Q^{U} eine divalente C₁₋₂₀ organische Gruppe ist.

3. Das Verfahren zur Herstellung eines Oxyalkylen-Polymers (P) gemäß einem der Ansprüche 1 bis 2, worin der Doppelmetall-Cyanid-Komplexkatalysator, der einen organischen Liganden aufweist, ein Doppelmetall-Cyanid-Komplex mit einem organischen Liganden ist, wie er für eine Ringöffnungspolymerisation einer Verbindung, die ein aktives Wasserstoffatom aufweist, an ein Alkylenoxid verwendet wird.

4. Das Verfahren zur Herstellung eines Oxyalkylen-Polymers (P) gemäß einem der Ansprüche 1 oder 2, worin das Polymer (pP) ein Polymer (pP1) ist, das erhalten wird durch Durchführen einer Ringöffnungspolymerisation einer Verbindung mit einem aktiven Wasserstoffatom mit einem Alkylenoxid, und der Doppelmetall-Cyanid-Komplexkatalysator mit einem organischen Liganden gemäß einem der Ansprüche 1 bis 3 ein Doppelmetall-Cyanid-Komplexkatalysator mit einem organischen Liganden ist, der zur Herstellung des Polymers (pP1) verwendet wird.

5. Das Verfahren zur Herstellung eines Oxyalkylen-Polymers (P) gemäß einem der Ansprüche 1 bis 4, worin der organische Ligand des Doppelmetall-Cyanid-Komplexkatalysators, der einen organischen Liganden aufweist, mindestens ein Element ausgewählt aus der Gruppe bestehend aus Ethylenglycol-Dimethylether (Glyme), Diethylenglycol-Dimethylether (Diglyme), Triethylenglycol-Dimethylether, tert.-Butylalkohol, n-Butylalkohol, sek. Butylalkohol, Isobutylalkohol, tert. Pentylalkohol, Isopentylalkohol und Ethylenglycol-mono-tert. butylether ist.

6. Das Verfahren zur Herstellung eines Oxyalkylen-Polymers (P) gemäß einem der Ansprüche 1 bis 4, worin der organische Ligand des Doppelmetall-Cyanid-Komplexkatalysators mit einem organischen Liganden Ethylenglycol-Dimethylether (Glyme) oder tert. Butylalkohol ist.

7. Das Verfahren zur Herstellung eines Oxyalkylen-Polymers (P) gemäß einem der Ansprüche 1 bis 4, worin der organische Ligand des Doppelmetall-Cyanid-Komplexkatalysators mit einem organischen Liganden Ethylenglycol-Dimethylether (Glyme) ist.

## Revendications

1. Procédé pour produire un polymère d'oxyalkylène (P) ayant une liaison uréthane et un groupe alcoxysilyle, qui comprend l'opération consistant à soumettre un polymère (pP) ayant une chaîne polyoxyalkylène et un groupe hydroxyle et un composé (U) ayant un groupe alcoxysilyle et un groupe isocyanate, à une réaction d'uréthanisation en présence d'un catalyseur complexe de cyanure métallique double ayant un ligand organique ;
dans lequel le rapport du nombre total de groupes isocyanates du composé (U) au nombre total de groupes hydroxyles du polymère (pP) (groupes isocyanates / groupes hydroxyles) est de 0,8 à 1,05.

2. Procédé pour produire un polymère d'oxyalkylène (P) selon la revendication 1, dans lequel le composé (U) est un composé représenté par la formule (1) suivante, et le polymère d'oxyalkylène (P) est un polymère ayant un groupe représenté par la formule (2) suivante :
(X¹-)ₐ(R-)_{b}Si-Q^{U}-NCO (1)
(X¹-)ₐ(R-)_{b}Si-Q^{U}-NHCOO- (2)
où chaque X¹ est indépendamment un groupe alcoxy en C₁ à C₆, R est un groupe alkyle en C₁ à C₆, a est 2 ou 3, b est 0 ou 1, a+b est 3, et Q^{U} est un groupe organique divalent en C₁ à C₂₀.

3. Procédé pour produire un polymère d'oxyalkylène (P) selon l'une quelconque des revendications 1 ou 2, dans lequel le catalyseur complexe de cyanure métallique double ayant un ligand organique est un complexe de cyanure métallique double ayant un ligand organique utilisé pour une polymérisation par ouverture de cycle d'un composé ayant un atome d'hydrogène actif à un oxyde d'alkylène.

4. Procédé pour produire un polymère d'oxyalkylène (P) selon l'une quelconque des revendications 1 ou 2, dans lequel le polymère (pP) est un polymère (pP1) obtenu par l'opération consistant à soumettre un composé ayant un atome d'hydrogène actif à une polymérisation par ouverture de cycle avec un oxyde d'alkylène, et le catalyseur complexe de cyanure métallique double ayant un ligand organique selon l'une quelconque des revendications 1 à 3 est un catalyseur complexe de cyanure métallique double ayant un ligand organique utilisé pour produire le polymère (pP1) .

5. Procédé pour produire un polymère d'oxyalkylène (P) selon l'une quelconque des revendications 1 à 4, dans lequel le ligand organique du catalyseur complexe de cyanure métallique double ayant un ligand organique est au moins un membre choisi dans l'ensemble constitué par l'éther diméthylique d'éthylèneglycol (glyme), l'éther diméthylique de diéthylèneglycol (diglyme), l'éther diméthylique de triéthylèneglycol, l'alcool tert-butylique, l'alcool n-butylique, l'alcool sec-butylique, l'alcool isobutylique, l'alcool tert-pentylique, l'alcool isopentylique et l'éther mono-tert-butylique d'éthylène-glycol.

6. Procédé pour produire un polymère d'oxyalkylène (P) selon l'une quelconque des revendications 1 à 4, dans lequel le ligand organique du catalyseur complexe de cyanure métallique double ayant un ligand organique est l'éther diméthylique d'éthylèneglycol (glyme) ou l'alcool tert-butylique.

7. Procédé pour produire un polymère d'oxyalkylène (P) selon l'une quelconque des revendications 1 à 4, dans lequel le ligand organique du catalyseur complexe de cyanure métallique double ayant un ligand organique est l'éther diméthylique d'éthylèneglycol (glyme).
